# FASCICULE DE BREVET EUROPEEN

(11) **EP 1 910 579 B1**
(45) Date de publication et mention de la délivrance du brevet: **15.01.2014**
(21) Numéro de dépôt: 05793375.6
(22) Date de dépôt: 29.07.2005
(51) Int. Cl.: C13B 50/00, A23L 1/303

(54) **MORCEAUX DE SUCRE FORTIFIES PAR AU MOINS UNE SUBSTANCE D INTERET, PROCEDE DE FABRICATION**
MIT WENIGSTENS EINER SUBSTANZ VON INTERESSE VERBESSERTE ZUCKERWÜRFEL, VERFAHREN ZU DEREN HERSTELLUNG
SUGAR CUBES ENHANCED WITH AT LEAST ONE SUBSTANCE OF INTEREST, METHOD FOR MAKING SAME

(43) Date de publication de la demande: 16.04.2008
(73) Titulaire: Saint Louis Sucre, 75008 Paris (FR)
(72) Inventeur: SASIA, Guy, F-80400 EPPEVILLE (FR); SIMEON, Jocelyn-Hugues, F-02100 SAINT QUENTIN (FR); RANSON, Laurent, F-80300 BUIRE SUR L'ANCRE (FR)
(74) Mandataire: Orès, Bernard
(86) Numéro de dépôt international: PCT/FR2005/001993
(87) Numéro de publication internationale: WO 2007/012704

(56) Documents cités:
- DE-A1- 4 022 058
- FR-A- 1 539 071
- GB-A- 1 296 944
- US-A- 4 115 147
- US-B1- 6 599 549
- DATABASE WPI Section Ch, Week 198951 Derwent Publications Ltd., London, GB; Class D17, AN 1989-376826 XP002372280 & SU 1 465 461 A (A MED FEEDING INST) 15 mars 1989 (1989-03-15)

## Description

La présente invention est relative à un procédé de fabrication de morceaux de sucre fortifiés par au moins une substance d'intérêt choisie parmi les vitamines, les protéines, les microorganismes, les colorants et les molécules volatiles se présentant sous la forme de microparticules comportant un enrobage soluble dans l'eau, ainsi qu'aux morceaux de sucres ainsi fortifiés susceptibles d'être obtenus selon un tel procédé.

On appelle vitamine A. tout •composé naturel présentant des caractéristiques biologiques similaires à celles du rétinol. En effet, le rétinol est le principal précurseur de la molécule de vitamine A active. Les caroténoïdes sont des pigments des végétaux dont certains possèdent une activité vitaminique A, le plus connu étant le β*-carotène.* L'activité vitaminique A de ces composés s'exprime par rapport à celle du rétinol selon un système équivalent rétinol (ER) ; chez l'homme, 6 mg de β-carotène ont la même activité que 1 mg de rétinol. Il faut noter que la dénomination "rétinoïdes", qui regroupe à la fois des composés naturels et de synthèse (médicaments), n'est pas utilisée dans le cadre alimentaire.

La vitamine A est indispensable à tous les âges de la vie. En effet, son rôle primordial dans le mécanisme de la vision est maintenant clairement établi. Elle intervient également dans la régulation (activation, répression) de l'expression des gènes, et est ainsi impliquée dans de nombreuses fonctions de l'organisme : développement de l'embryon, croissance des cellules, renouvellement des tissus (peau, muqueuse intestinale), système immunitaire... En plus des propriétés de la vitamine A, le β-*carotène* peut agir comme antioxydant (destruction des radicaux libres).

Dans l'alimentation humaine, la vitamine A est présente sous forme de rétinol et de ses dérivés de manière exclusive dans les produits d'origine animale, et sous forme de caroténoïdes pro-vitaminiques essentiellement dans les produits d'origine végétale. Les foies de poissons et d'animaux d'élevage ont les teneurs les plus élevées en rétinol. Toutefois, dans les pays industrialisés, ce sont les produits laitiers, le beurre et les oeufs qui contribuent à la plus grande partie de l'apport en vitamine A.

Les apports journaliers recommandés (AJR) en vitamine A varient en fonction de l'age et du sexe des individus concernés. Ils sont donnés dans le Tableau 1 ci-après :

**TABLEAU 1**

| **TRANCHE D'AGE** | **APPORTS CONSEILLES** **(µG ER/JOUR)*** |
|---|---|
| Nourrissons | 350 |
| Enfants 1-3 ans | 400 |
| Enfants 4-6 ans | 450 |
| Enfants 7-9 ans | 500 |
| Enfants 10-12 ans | 550 |
| Adolescents 13-15 ans | 700 |
| Adolescentes 13-15 ans | 600 |
| Adolescents 16-19 ans et hommes adultes | 800 |
| Adolescentes 16-19 ans et femmes adultes | 600 |
| Femmes enceintes (3^{ème} trimestre) | 700 |
| Femmes allaitantes | 950 |

| | |
|---|---|
| * ER : équivalent rétinol ; 6 µg de β-carotène ont la même activité vitaminique que 1 µg de rétinol soit 1 µg ER ; 1 Unité Internationale (UI) = 0,303 µg de rétinol | |

Il est donc important d'avoir une alimentation permettant d'assurer un AJR correct en vitamine A.

La baisse de l'acuité visuelle, surtout en lumière crépusculaire (vision nocturne), est l'un des premiers signes apparents de la carence en vitamine A chez l'homme (héméralopie). Des carences sévères en vitamine A provoquent :
- une perturbation de la matrice organique de l'os entraînant des troubles de l'ossification ;
- des troubles dermatologiques cutanés (dessèchement, hyperkératose) et muqueux (sécheresse, ulcérations bronchiques, digestives et oculaires (xérophtalmie)) ;
- une diminution de la croissance staturo-pondérale (retards de croissance) ; etc
- une diminution de la résistance aux infections.

Il semble que la carence en vitamine A n'existe pas dans les pays industrialisés, contrairement aux problèmes de santé publique majeurs posés dans les pays en voie de développement (PVD). La carence en vitamine A (CVA) est un problème de santé publique dans de très nombreux pays et touche plus de 140-250 millions d'enfants d'âge préscolaire à l'échelle mondiale. Dans des régions frappées par ce problème, la CVA est la cause de vingt-cinq pour cent des décès infantiles. De nouvelles recherches indiquent que la CVA pourrait être un facteur de risque important dans la mortalité maternelle.

Au Sommet Mondial pour les Enfants en 1990, l'Organisation Mondiale de la Santé (OMS), l'UNICEF et les gouvernements de tous les pays du monde s'étaient engagés à éliminer la CVA en tant que problème de santé publique ainsi que toutes ses séquelles, y compris la cécité, d'ici l'an 2000. Cependant, on constate aujourd'hui que ce problème est toujours d'actualité puisque 35 pays seulement sont parvenus à éliminer la CVA dans ce délai. Il est nécessaire et urgent de fournir des efforts supplémentaires afin d'accélérer le progrès vers cet objectif. En effet, dans son rapport sur la santé mondiale de 2003, l'OMS, estime que les CVA sont responsables pour 16 % du fardeau mondial des maladies causées par la malaria, pour 18 % du fardeau des maladies à caractère diarrhéiques, et d'une proportion importante de tous les cas d'infections respiratoires sévères et de rougeole.

Une des façons de remédier à ce problème est d'approvisionner les PVD en produits alimentaires de consommation courante fortifiés en vitamine A de façon à supplémenter les populations concernées de façon simple, efficace et systématique.

Au sens de la présente Invention, on entend par "fortification", l'ajout d'au moins une substance d'intérêt à des aliments et des condiments régulièrement consommés par une proportion significative de la population - par exemple la farine, le sucre, le sel, l'huile de friture, et les sauces.

Un des aliments les plus consommés à l'échelle mondiale est le sucre. Il constitue par conséquent une cible de choix pour la supplémentation des populations défavorisées présentant une carence ou un risque de CVA.

C'est ainsi que les législations d'un certain nombre de pays en voie de développement, et en particulier d'Afrique, ont été modifiées pour imposer aux acteurs de l'industrie sucrière, un approvisionnement en sucre fortifié en vitamine A.

Actuellement, le sucre fortifié en vitamine A est produit sous la forme de sucre en poudre selon un procédé de préparation depuis longtemps employé dans l'industrie sucrière.

En effet, à titre d'exemple, le brevet français n° FR 1,539,071, délivré le 5 août 1968, décrit notamment un procédé de fortification de sucre sec (non liquide) par des vitamines, des minéraux ou des produits analogues, selon une méthode à dilution multiple, consistant dans un premier temps à préparer un pré-mélange renfermant des vitamines, des agents anti-agglutinants et réducteurs d'odeur et une petite quantité de sucre, puis à le mélanger avec des quantités successives de sucre de plus en plus importantes, par exemple dans un mélangeur à double tambour.

Par ailleurs, de nombreuses substances d'intérêt telles que par exemple les vitamines, les protéines comme par exemple les enzymes, les levures, certains colorants sont sensibles aux agressions externes et voient leur propriétés dégradées lorsqu'elles sont mise en contact avec un environnement défavorable à leur bonne conservation (humidité, chaleur, air ambiant, lumière). D'autres substances d'intérêt ont un caractère volatile et ne peuvent pas être utilisées si elles ne comportent pas un système permettant d'empêcher leur volatilisation.

Il a donc déjà été proposé de protéger de telles substances sensibles par un enrobage permettant d'isoler la substance vis-à-vis de son environnement extérieur de façon à en diminuer la dégradation ou la volatilisation au cours du temps. Dans la plus part des cas de tels enrobages sont solubles dans l'eau afin que la substance qu'ils contiennent soit facilement accessible par simple dissolution de l'enrobage au moment de l'utilisation.

La vitamine A est un exemple de substance extrêmement sensible à l'oxydation, donc facilement dégradable. Différentes sociétés proposent actuellement sur le marché du palmitate de vitamine A sous forme sèche dont la stabilité est renforcée par un système anti-oxydant. De façon plus précise, ces produits se présentent sous la forme de microparticules constituées de palmitate de vitamine A et d'un enrobage pouvant être constitué de gomme arabique, de sucre, d'amidon, et/ou de dextrine, en association avec un ou plusieurs agents anti-oxydants. On peut ainsi mentionner les complexes vitaminés sous forme de palmitate de vitamine A vendus par la société BASF sous les références VAP 250 CK CWD (enrobage composé de gomme arabique, de sucre et d'amidon et renfermant un mélange de butylhydroxytoluène (BHT) et d'ascorbate de sodium à titre d'agents anti-oxydants) et VAP 250 MS CWD (enrobage composé de dextrine, de sucre et d'amidon et renfermant du butyl-*p*-crésol à titre d'agent anti-oxydant) ou bien par la société DSM (Allemagne) sous les références 250 S/N et 250 S/N-B (enrobage de sucre et d'amidon avec un mélange de BHT et d'ascorbate de sodium à titre d'agents anti-oxydants). Ces microparticules enrobées présentent une granulométrie très fine, qui selon les fabricants, doit garantir une conservation et donc une stabilité améliorées de la vitamine A, ainsi qu'une distribution homogène des microparticules de vitamine A lorsqu'elles sont incorporées dans des poudres, en particulier dans du sucre en poudre.

Cependant, la supplémentation des populations en vitamine A par l'intermédiaire de sucre en poudre fortifié en vitamine A présente un certain nombre d'inconvénients :
- la présentation du sucre sous la forme d'une poudre ne permet pas de doser de façon précise les quantités de vitamine A ingérées : il est en effet très difficile de distribuer des doses unitaires d'un poids constant et reproductible d'un individu à l'autre sans peser de façon précise et donc fastidieuse les quantités de sucre en poudre administrées. De plus, malgré l'utilisation de complexes vitaminés sous la forme de microsphères telles que mentionnées précédemment, la vitamine A a néanmoins tendance à déphaser pendant la manipulation et le stockage du sucre en poudre, rendant sa répartition finale inhomogène au sein de la poudre. Il en résulte que le dessus des containers de sucre en poudre sont appauvris en vitamine, alors que les fonds des containers se retrouvent enrichis en vitamine, rendant encore plus aléatoire l'administration d'une quantité précise de vitamine à chaque individu ;
- les procédés de préparation de sucre en poudre fortifiés en vitamine A ne sont pas toujours complètement adaptés à la fragilité des microparticules de vitamine A (opérations d'incorporation et de mélange des poudres notamment), conduisant, dans une part non négligeable, à l'altération de l'enrobage et donc à une oxydation prématurée, avec perte d'activité, de la vitamine A dans le produit fini.

Enfin, la fabrication de sucre en morceaux fait nécessairement appel à une étape de moulage de sucre en poudre humidifié par de l'eau qui n'est malheureusement pas compatible avec la nature soluble de l'enrobage des microparticules de substances d'intérêt avec lesquelles on souhaite fortifier le sucre.

C'est donc afin de remédier à l'ensemble de ces inconvénients que les Inventeurs se sont donnés pour but de pourvoir à un procédé permettant de fabriquer du sucre en morceaux fortifié par des microparticules d'au moins une substance d'intérêt comportant un enrobage soluble dans l'eau, conduisant à un produit fini :
- assurant une meilleure stabilité dans le temps de cette substance d'intérêt que les procédés actuels,
- renfermant la substance d'intérêt selon une distribution homogène et également stable dans le temps, et
- permettant une administration selon un dosage précis en substance d'intérêt de façon à assurer une corrélation fiable et directe entre les quantités de sucre et de substance d'intérêt ingérées (dans le cas d'une vitamine : % AJR / quantité de sucre par exemple).

Les Inventeurs ont ainsi mis au point un procédé qui répond à l'ensemble de ces objectifs et qui permet de préparer des morceaux de sucre fortifiés par des microparticules d'au moins une substance d'intérêt choisie parmi les vitamines, les protéines, les microorganismes, les colorants et les molécules volatiles comportant un enrobage soluble dans l'eau.

La présente Invention a donc pour premier objet un procédé de fabrication de morceaux de sucre fortifiés par des microparticules d'au moins une substance d'intérêt choisie parmi les vitamines, les protéines, les microorganismes, les colorants et les molécules volatiles comportant un enrobage soluble dans l'eau, comprenant au moins les étapes suivantes :
a) la préparation d'un pré-mélange renfermant au moins, à titre d'ingrédients, du sucre sec en poudre et des microparticules d'au moins une substance d'intérêt choisie parmi les vitamines, les protéines, les microorganismes, les colorants et les molécules volatiles comportant un enrobage soluble dans l'eau ;
b) l'incorporation du pré-mélange obtenu en a) avec du sucre en poudre, ledit sucre en poudre étant humidifié préalablement, simultanément ou postérieurement à l'incorporation du pré-mélange ;
c) le mélange du pré-mélange obtenu en a) et du sucre en poudre humidifié pour obtenir un sucre en poudre humide fortifié en substance d'intérêt ;
d) le moulage du sucre en poudre humide fortifié obtenu en c) ; et
e) le séchage des morceaux de sucre fortifiés en substance d'intérêt, ledit procédé étant caractérisé par le fait que :
   - ledit pré-mélange de l'étape a) renferme en outre au moins une matière grasse,
   - l'étape a) de préparation du pré-mélange est effectuée à une température supérieure à la température de fusion de ladite matière grasse ; et que
   - l'étape a) comprend au moins les sous-étapes suivantes :
   - a1) l'introduction de la matière grasse dans le sucre sec en poudre sous agitation,
   - a2) le mélange du sucre sec en poudre et de la matière grasse, et
   - a3) l'ajout des microparticules de ladite substance d'intérêt dans le pré-mélange obtenu en a2), sous agitation.

Grâce à ce procédé, il est maintenant possible de :
- maîtriser le mélange de poudres de granulométrie différentes avec le sucre utilisé pour la formation des morceaux ainsi que la stabilité de ces poudres au cours de l'étape de moulage ;
- assurer une répartition homogène et durable des microparticules de substance(s) d'intérêt dans chaque morceau de sucre et ainsi garantir une dose précise de celles-ci lors de l'administration ;
- améliorer la stabilité de la substance d'intérêt : la présentation du sucre sous la forme de morceaux permet en effet de limiter la dégradation de la substance d'intérêt par les agressions extérieures telles que l'oxydation, l'humidité, la chaleur et la lumière, de limiter les transferts d'oxygène et de supprimer le problème du déphasage sucre en poudre / substance d'intérêt rencontré dans l'art antérieur lors de la manipulation et du stockage du sucre en poudre.

Selon une forme de réalisation préférée de l'invention, les sous-étapes a1), a2) et a3) de l'étape a) sont réalisées dans l'ordre a1), puis a2), puis a3).

Au sein du pré-mélange, la (ou les) matière(s) grasse(s) est (sont) de préférence utilisée(s) en une quantité inférieure ou égale à 5 % en poids environ par rapport au poids total dudit pré-mélange, et encore plus préférentiellement en une quantité comprise entre 1,0 et 2,0 % en poids environ par rapport au poids total du pré-mélange.

Selon l'Invention, la (ou les) matière(s) grasse(s) utilisées sont de préférence choisie(s) parmi les corps hydrogénés et non hydrogénés, fractionnés ou non fractionnés, estérifiés ou non estérifiés.

Parmi de telles matières grasses, on peut notamment citer l'huile de palme stéarique, l'huile de palme, le beurre de cacao, le beurre de cacahuètes, l'huile de palmiste, l'huile de coprah hydrogénée ou non hydrogénée, les cires alimentaires qui sont des mélanges complexes d'esters d'acides gras et d'alcools gras à longues chaînes telles que le produit vendu sous la dénomination commerciale Dynacet® (ester de glycérine), la cire microcristalline d'origine pétrolière, les acides gras tels que les acides stéarique et palmitique, les huiles de tournesol, de soja et d'arachide, ainsi que les mélanges desdites matières grasses.

Selon l'Invention, la (ou les) matière(s) grasse(s) utilisées sont de préférence des matières grasses végétale(s) ayant une température de fusion comprise entre 10 et 50°C environ. Selon une forme de réalisation particulièrement préférée de l'Invention, on choisit la ou les matière(s) grasse(s) utilisée(s) parmi celles qui présentent une température de fusion comprise entre 25 et 45°C environ.

Parmi de telles huiles, on préfère tout particulièrement l'huile de coprah hydrogénée ou non hydrogénée. (température de fusion (TF) comprise entre 25 et 35°C).

Au sens de la présente Invention, on entend par sucre sec en poudre, des cristaux de saccharose ou un mélange de cristaux de saccharose et d'au moins un autre sucre cristallisé ou pulvérulent et/ou d'au moins un édulcorant sous forme pulvérulente. Quelle que soit sa nature, le sucre sec en poudre utilisable selon le procédé conforme à l'invention, présente généralement une granulométrie moyenne comprise entre 0,3 mm et 1,0 mm environ, de préférence entre 0,4 et 0,8 mm environ.

Selon une autre forme de réalisation préférée de l'invention, un tel sucre en poudre présente un taux de fins cristaux, c'est à dire de granulométrie inférieure à 0,25 mm, inférieur à 6 % en poids et de préférence inférieur à 2 % en poids par rapport au poids total du sucre en poudre.

Au sein du pré-mélange, le sucre sec en poudre représente de préférence de 60 à 98 % en poids environ et encore plus préférentiellement de 85 à 92 % en poids environ par rapport au poids tolal du ré-mélange.

Les substances d'intérêt sont de préférence choisies parmi les substances sensibles aux agressions extérieures telles que la lumière, la chaleur, l'humidité, ou à l'oxydation et parmi les substances volatiles. Le procédé conforme à l'Invention permet en effet d'incorporer dans du sucre en morceaux une substance sensible aux agressions extérieures ou volatile se présentant sous la forme de microparticules enrobées par un enrobage soluble dans l'eau choisie parmi les vitamines, et en particulier les vitamines A, B, C, D et E ; les protéines telles que les enzymes ; les microorganismes tels que les levures ; les colorants ; et les molécules volatiles telles que les arômes.

Selon une forme de réalisation particulièrement préférée du procédé conforme à l'Invention, la substance d'intérêt est choisie parmi les vitamines, et encore plus préférentiellement est de la vitamine A.

Au sens de la présente invention, les termes "vitamine A" peuvent être employés indifféremment pour désigner de la vitamine A ou l'un de ses dérivés tels que par exemple le palmitate de vitamine A..

De telles substances d'intérêt sont enrobées par un enrobage soluble dans l'eau pouvant par exemple être constitué de sucre et/ou d'un ou plusieurs polymères de nature saccharidique tels que l'amidon, les dextrines, les dextranes et les gommes comme la gomme arabique.

Parmi les microparticules de vitamine A, on préfère tout particulièrement les microparticules de vitamine A dont l'enrobage renferme au moins un agent antioxydant telles que celles mentionnées ci-avant : VAP 250 CK CWD et VAP 250 MS CWD de la société BASF et 250 S/N et 250 S/N-B de la société DSM ; les microparticules VAP 250 MS CWD et 250 S/N-B étant particulièrement préférées selon l'invention.

Au sein du pré-mélange, la ou les microparticules de substances d'intérêt représentent de préférence de 1 à 35 % en poids environ et encore plus préférentiellement de 5 à 15 % en poids environ par rapport au poids total du pré-mélange.

Lorsque la substance d'intérêt est une vitamine, il est également possible de définir la quantité de substance d'intérêt en Unités Internationales (UI). Dans ce cas, celle-ci est de préférence présente à raison de 10 000 à 40 000 UI environ par gramme de pré-mélange. Ces valeurs sont particulièrement applicables lorsque la vitamine est de la vitamine A.

En plus des ingrédients mentionnés ci-dessus, le pré-mélange préparé à l'étape a) du procédé conforme à l'Invention peut en outre renfermer un ou plusieurs additifs, notamment un ou plusieurs agents anti-oxydants utilisés classiquement dans l'industrie agro-alimentaire tels que le BHT, la lécithine, l'acide ascorbique, l'ascorbate de sodium, le palmitate d'ascorbyle, le butyl-*p*-crésol, l'α-tocophérol, le di-α-tocophérol, et leurs mélanges tels que le mélange de di-α-tocophérol, de palmitate d'ascorbyle et de lécithine vendu par exemple sous la dénomination commerciale Ronoxan-A ® par la société ROCHE (France).

Selon une forme de réalisation particulière de l'invention, lorsqu'un agent anti-oxydant est utilisé, il est alors de préférence introduit dans le sucre en poudre sec en même temps que la matière grasse, c'est-à-dire au cours de la sous-étape a1).

Selon une forme de réalisation préférée de l'invention, le sucre sec en poudre utilisé à la sous-étape a1) est de préférence préalablement chauffé à une température comprise entre 25 et 70°C environ, et encore plus préférentiellement à une température comprise entre 30 et 35°C environ.

La matière grasse utilisée lors de la sous-étape a1) est de préférence préalablement portée à une température supérieure à sa température de fusion avant d'être incorporée au sucre sec en poudre.

A cet égard, il est important de noter que lorsqu'un additif tel qu'un agent antioxydant est utilisé conjointement à la matière grasse, alors le mélange matière grasse/additif est préalablement porté à une température supérieure à la température de fusion du mélange matière grasse/additif avant d'être incorporé au sucre sec en poudre. A titre d'exemple, lorsqu'un mélange d'huile de coprah et de Ronoxan-A ® est utilisé, ledit mélange est alors de préférence porté à une température comprise entre 30 et 70°C environ, et encore plus préférentiellement entre 45 et 55°C, avant d'être introduit dans le sucre en poudre sec.

Egalement au cours de cette étape, l'introduction de la matière grasse, éventuellement en mélange avec au moins un additif, est de préférence réalisée par injection directe au sein du sucre en poudre sous agitation, par exemple au moyen d'une canne d'injection.

Après la sous-étape a1), le mélange sucre en poudre sec/matière grasse (sous-étape a2)) est de préférence conduit pendant une période pouvant varier entre 5 et 20 minutes environ, et encore plus préférentiellement pendant 10 minutes environ.

A l'issue de la sous-étape a3), c'est-à-dire après l'introduction de la ou des microparticules de substances d'intérêt dans le pré-mélange, l'agitation est de préférence maintenue pendant une période pouvant varier entre 5 et 20 minutes environ, et encore plus préférentiellement pendant 10 minutes environ.

Selon l'invention, la quantité pondérale de pré-mélange à utiliser lors de l'étape b) par rapport à la quantité pondérale de sucre en poudre varie en fonction de la quantité de substances d'intérêt présente au sein du pré-mélange et du niveau de fortification final que l'on souhaite obtenir dans le sucre en morceaux. A titre indicatif, le rapport pondéral pré-mélange / sucre en poudre lors de l'étape b) varie de préférence entre 1/1000 et 1/100 environ et encore plus préférentiellement entre 2/1000 et 6/1000 environ.

Lors de l'étape b), le taux d'humidité au sein du sucre en poudre humidifié est de préférence compris entre 1 et 3 % en poids par rapport au poids total du mélange ; un taux d'humidité compris entre 1,1 et 1,5 % en poids environ étant tout particulièrement préféré.

Toujours lors de l'étape b), le sucre en poudre est humidifié, généralement par pulvérisation d'eau directement au sein du mélange sucre en poudre/pré-mélange, simultanément à l'étape b).

Selon une forme de réalisation préférée de l'invention, les étapes b) et c) du procédé sont conduites à une température comprise entre 15 et 40°C environ, encore plus préférentiellement entre 20 et 30°C environ.

Le moulage du sucre lors de l'étape d) est de préférence réalisé à l'aide d'une mouleuse dans laquelle le mélange de sucre humide fortifié en substance d'intérêt tel qu'obtenu à l'issue de l'étape c) est réparti dans des moules par exemple au moyen d'une vis mélangeuse.

Après l'étape de moulage, les morceaux de sucre sont de préférence séchés à une température comprise entre 60 et 75°C environ, de préférence par passage dans un sécheur constitué de 3 parties :
- une partie ascendante où la température augmente progressivement pour atteindre 75°C environ,
- une partie haute horizontale de transfert dans laquelle la température est également d'environ 75°C, et
- une partie descendante, ventilée où les morceaux de sucre fortifiés en substance(s) d'intérêt sont progressivement refroidis.

La durée totale du séchage est généralement comprise entre 20 et 40 minutes, de préférence d'environ 25 minutes.

A la sortie du sécheur, les morceaux de sucre fortifiés en substance(s) d'intérêt peuvent être directement conditionnés, par exemple dans des boites en carton.

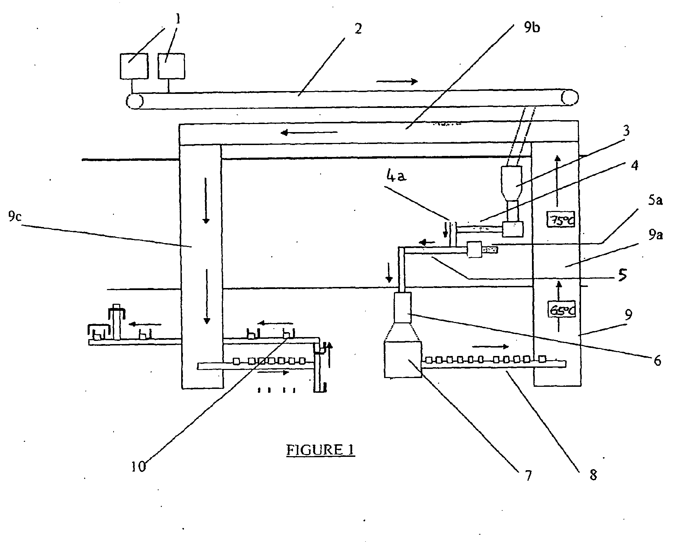

La figure 1 annexée est une représentation schématique d'une ligne de fabrication industrielle de morceaux de sucre fortifiés en substance(s) d'intérêt pouvant être utilisée pour mettre en oeuvre le procédé de l'invention.

Sur cette ligne de fabrication, le stockage du sucre en poudre se fait dans 2 silos tampons 1 pouvant par exemple avoir une contenance de 50 tonnes environ chacun. Le sucre en poudre sortant de ces silos tampons 1 est acheminé à l'aide d'une chaîne à godets 2 permettant d'alimenter plusieurs lignes de fabrication, vers une ou plusieurs trémies d'alimentation 3 d'une vis doseuse 4. Cette trémie 3 reste continuellement en charge afin d'assurer une alimentation constante en sucre dans la vis doseuse 4, par exemple à un débit constant de 40 kg de sucre en poudre par minute. L'introduction du pré-mélange préparé à l'étape a) du procédé conforme à l'invention se fait en bout de vis doseuse, par l'intermédiaire d'un microdoseur pondéral 4a asservi à la vitesse de la mouleuse 7, légèrement en amont du raccordement de la vis doseuse 4 à une vis mélangeuse 5 constituée d'un arbre creux permettant la pulvérisation d'eau au niveau 5a, directement au coeur du produit. Le mélange du sucre en poudre humidifié et du pré-mélange contenant la ou les microparticules d'au moins une substance d'intérêt se fait donc dans la vis mélangeuse 5, généralement sur une longueur comprise entre 1 et 2 m environ. Le sucre humidifié et déjà fortifié par la ou les substances d'intérêt est ensuite stocké dans une trémie d'alimentation 6 d'une mouleuse 7. Cette trémie d'alimentation 6 reste de préférence toujours en charge de façon à assurer un bon remplissage des moules ; c'est son niveau qui va réguler le fonctionnement de la vis doseuse 4 et du microdoseur 4a. La mouleuse 7 constitue donc le point de régulation de la vitesse de la ligne de fabrication. En règle générale, le temps de séjour (TDS) du sucre humidifié fortifié dans cette trémie d'alimentation 6 est d'environ 9 minutes pour un fonctionnement basé sur une production de 50 tonnes par jour. En sortie de la mouleuse 7, les morceaux de sucre sont acheminés, par exemple au moyen d'un tapis roulant 8, vers un tunnel de séchage 9. Le tunnel de séchage 9 est constitué de 3 zones (9a, 9b et 9c) comprenant une zone ascendante 9a dans laquelle la température augmente progressivement jusqu'à 75°C environ, une zone horizontale haute de transfert 9b et une zone descendante ventilée 9c où les morceaux de sucre sont progressivement refroidis. A titre indicatif, pour une cadence de 50 tonnes de morceaux de sucre par jour, la durée totale du séchage dans le tunnel de séchage 9 peut être estimée à 25 minutes environ. A la sortie du tunnel de séchage 9, les morceaux de sucre fortifiés en substance(s) d'intérêt, sont mis en boites 10.

La présente invention a également pour objet les morceaux de sucre fortifiés en substance(s) d'intérêt, choisie parmi les vitamines, les protéines, les microorganismes, les colorants et les molécules volatiles susceptibles d'être obtenus par la mise en oeuvre du procédé conforme à l'Invention et tel que décrit ci-dessus.

Les morceaux de sucre fortifiés en substance(s) d'intérêt faisant l'objet de l'Invention sont caractérisés par le fait qu'ils renferment des microparticules d'au moins une substance d'intérêt comportant un enrobage soluble dans l'eau, de préférence des microparticules d'au moins une substance sensible aux agressions extérieures et/ou d'au moins une substance volatile.

Selon une forme de réalisation préférée de l'invention, les substances d'intérêt sensibles aux agressions extérieures sont choisies parmi les vitamines A, B, C, D et E. Les morceaux de sucre renfermant des microparticules de vitamine A sont tout particulièrement préférés selon l'Invention.

Au sein des morceaux de sucre fortifiés conformes à l'invention, la quantité de microparticules est de préférence comprise entre 0,01 et 5 g/kg de sucre, et encore plus préférentiellement entre 0,05 et 2 g/kg de sucre, tout particulièrement entre 0,1 et 1 g/kg de sucre.

La quantité pondérale de microparticules à utiliser lors de la préparation du pré-mélange à l'étape a) du procédé conforme à l'Invention pourra cependant varier en dehors de ces limites en fonction de la quantité pondérale de substance d'intérêt présente au sein des microparticules (suivant les indications du ou des fabricants).

Lorsque la substance d'intérêt est une vitamine, et en particulier de la vitamine A, la quantité de substance d'intérêt présente dans les morceaux de sucre peut être exprimée en Unités Internationales. Dans ce cas, la quantité de vitamine(s) est de préférence comprise entre 100 et 150 000 UI par kg de sucre. Ces quantités peuvent néanmoins varier en fonction de la nature de la ou des vitamines et des exigences commerciales ou réglementaires.

Les morceaux de sucre fortifiés en substance(s) d'intérêt, et notamment en vitamine(s) selon l'Invention présentent les avantages suivants :
- ils sont solubles dans l'eau, ainsi que dans de nombreuses boissons à température ambiante ou boissons chaudes (35-40°C) ;
- leur densité est proche de celle de l'eau ;
- ils permettent d'augmenter la résistance des substances d'intérêt, et notamment des vitamines vis-à-vis des agressions extérieures, telles que l'oxydation, la lumière, l'humidité et la chaleur, de façon à assurer un niveau résiduel de substance(s) d'intérêt, en particulier de vitamine(s), acceptable après de longues périodes de stockage ;
- ils assurent une répartition durablement homogène des substances d'intérêt, et en particulier des vitamines, permettant ainsi leur administration en une quantité précise aux individus concernés.

Selon une forme de réalisation préférée de l'Invention, les morceaux de sucre renferment des microparticules de vitamine(s) et encore plus particulièrement des microparticules de vitamine A. Dans ce dernier cas, les microparticules de vitamine A sont de préférence choisies parmi les produits vendus sous les références commerciales VAP 250 CK CWD et VAP 250 MS CWD par la société BASF et 250 S/N et 250 S/N-B par la société DSM (Allemagne).

Le poids de chaque morceau de sucre n'est pas critique, cependant pour des raisons d'habitudes alimentaires et de respect des normes en vigueur dans l'industrie agro-alimentaire, chaque morceau de sucre a de préférence un poids compris entre 1 et 8 g et encore plus préférentiellement entre 4 et 7 g.

Ainsi, dans le cas particulier de la vitamine A, les quantités de vitamine à introduire dans un morceau de sucre pesant 5,3 g en fonction des quantités de vitamine que l'on souhaite administrer sont indiquées dans le Tableau II ci-après :

**TABLEAU II**

| **Niveau minimum de fortification du sucre (UI/g)** | **Quantité de vitamine A par morceau (UI)** | **Quantité de rétinol par morceau (µg)** | **AJR en vitamine A par morceau** **(% par rapport à l'AJR)** | | |
|---|---|---|---|---|---|
| | | | **Enfants de 7-9 ans** **(AJR=500 µg)** | **Hommes adultes** **(AJR=800 µg)** | **Femmes allaitantes** **(AJR=950 µg)** |
| 10 000 | 53 | 16 | 3,2 | 2,0 | 1,7 |
| 25 000 | 133 | 40 | 8,0 | 5,0 | 4,2 |
| 40 000 | 212 | 64 | 12,8 | 8,0 | 6,7 |
| 50 000 | 265 | 80 | 16,0 | 10,0 | 8,4 |
| 75 000 | 398 | 120 | 24,0 | 15,0 | 12,6 |
| 100 000 | 530 | 161 | 32,2 | 20,1 | 19,9 |

La forme des morceaux de sucre n'est pas critique selon l'invention. Cependant, de façon usuelle, les morceaux de sucre peuvent par exemple avoir une forme sensiblement rectangulaire ou cubique, ce qui facilite leur conditionnement en boites.

Outre les dispositions qui précèdent, l'invention comprend encore un exemple de préparation de morceaux de sucre fortifiés en vitamine A, conformément au procédé de l'Invention, ainsi qu'à un exemple concernant une étude de la stabilité au stockage de la vitamine A dans du sucre en morceaux comparativement à la stabilité de la vitamine A dans du sucre en poudre.

### EXEMPLE 1 : PRÉPARATION DE MORCEAUX DE SUCRE FORTIFIES EN VITAMINE A

Cet exemple a pour but d'illustrer la préparation de morceaux sucre fortifiés en vitamine A, à raison de 100 000 UI de vitamine A par kg de sucre.

### 1) Réalisation d'un pré-mélange

26,52 kg de saccharose en poudre sec, présentant une granulométrie moyenne comprise entre 0,4 et 0,8 mm ont été introduits dans un mélangeur à cuve tournante de type SOFRAGIR ® vendu par la société SOFRADEN (Saint Etienne, France). Le mélangeur a été mis en mouvement à une vitesse de 4 rotations par minutes (RPM) et tempéré à une température de 25°C à l'aide d'une soufflante à air chaud. La vitesse de rotation du mélangeur a ensuite été augmentée à 8 RPM, puis un mélange de 0,477 kg d'huile de coprah raffinée ayant une température de fusion de 26°C environ (Société Soetenaey, Fécamp, France) et de 0,024 kg d'agent anti-oxydant vendu sous la dénomination commerciale RONOXAN-A ® par la société ROCHE, préalablement porté à une température de 60°C, a été vaporisé directement au coeur du sucre en poudre sec par l'intermédiaire d'une canne d'injection.

Après mélange pendant 10 minutes, le mélangeur a été stoppé et 3 kg de microparticules de vitamine A (sous forme de palmitate) vendues sous la dénomination commerciale VAP 250 MS CWD par la société BASF, ont été ajoutés dans le mélangeur. Le mélangeur a été remis en rotation à 8 RPM pendant 10 minutes.

On a obtenu un pré-mélange fortifié en vitamine A renfermant 25 000 UI de vitamine A, sous forme de palmitate, par g de sucre.

### 2) Fabrication de morceaux de sucre fortifiés en vitamine A

Le pré-mélange préparé ci-dessus a ensuite été introduit dans une ligne de fabrication de morceaux de sucre telle que celle représentée schématiquement à la figure 1 annexée, ayant une cadence de 38 kg de morceaux de sucre/min. L'ajout du pré-mélange dans le sucre est réalisée à l'aide d'un microdoseur de la société K-Tron International Inc. (Pitman, NJ, USA), dans les proportions de 4/1000 avec le saccharose en poudre (soit 152 g/min), juste en amont de la vis de mouillage de la ligne, qui permet ainsi le bon mélange du pré-mélange avec le flux de sucre en poudre. L'eau introduite, à température ambiante, dans la vis de mouillage (de type sans fin), représentait 1,3 %, le tout sur une longueur de 1,3 mètres. Cette vis de mouillage alimente la trémie de la mouleuse à sucre qui a permis de fabriquer des morceaux moulés cubiques de calibre 1,7 cm de coté.

Les morceaux de sucre ainsi moulés ont ensuite été séchés dans un tunnel de séchage comprenant une zone ascendante à une température de 75°C, une zone horizontale à 75°C et une zone descendante de refroidissement, le tout pendant 25 minutes, avant la mise en boite des morceaux.

Après séchage, on a obtenu des morceaux de sucre fortifiés en vitamine A. Chaque morceau de sucre pesait environ 5,3 g et contenait 530 UI de vitamine A (palmitate) sous la forme de microparticules réparties de façon très homogène au sein des morceaux (soit 100 000 UI de vitamine A, sous forme de palmitate, par kg de sucre).

Après fabrication, ces morceaux de sucre ont été conditionnés en boites en carton renfermant chacune 0,5 kg de morceaux de sucre fortifiés en vitamine A.

### EXEMPLE 2 : ETUDE LA STABILITE DE LA VITAMINE A AU SEIN DE MORCEAUX DE SUCRE

Dans cet exemple, on a étudié la stabilité au stockage de la vitamine A (VAP 250 MS CWD) contenue dans les morceaux de sucre tels que préparés ci-dessus à l'exemple 1.

La stabilité de la vitamine A au sein des morceaux a été étudiée après stockage des morceaux en boites en carton opaque pendant 1 (t = 1), 2 (t = 2) et 3 (t = 3) mois, à une température comprise entre 20 et 25°C, dans une atmosphère renfermant entre 40 et 60% d'humidité relative (HRE). La vitamine A a également été dosée dans les morceaux de sucre juste après leur moulage (t = 0).

La vitamine A a été dosée après dissolution du sucre et extraction du palmitate de vitamine A à l'hexane selon la méthode spectrophotométrique décrite dans "Manual for Sugar Fortification with Vitamin A: Part 3", "Analytical Methods for the Control and Evaluation of Sugar Fortification of Vitamin A", Guillermo Arroyave et Omar Dary, disponible sur le réseau Internet à l'adresse suivante : www.jsi.com/intl/omni/sugr pt3.htm, qui est elle-même adaptée d'une méthode de dosage décrite par Arroyave G et de Funes C, dans Arch. Latinoamer. Nutr., 1974, 24, 147-153.

Les résultats de stabilité de la vitamine A présente au sein des morceaux de sucre sont présentés dans le Tableau III ci-après :

**TABLEAU III**

| **Pourcentage résiduel de Vitamine A par rapport à la quantité initiale injectée dans le sucre** | | | | |
|---|---|---|---|---|
| Théorique | t = 0 | t = 1 | t = 2 | t = 3 |
| 100 % | 96 % | 85 % | 82 % | 84 % |

On constate donc qu'après 3 mois de stockage dans les conditions indiquées ci-dessus, les morceaux de sucre contiennent encore plus de 80 % de la quantité de vitamine initialement introduite dans le sucre.

A titre comparatif, le même dosage a été effectué sur du sucre en poudre dans lequel la même quantité de vitamine A a été introduite de façon classique, c'est-à-dire sans utiliser une matière grasse avant d'introduire la vitamine A, et sans effectuer l'opération de moulage du sucre. Comparativement, on observe une quantité résiduelle de seulement 60 % après 3 mois de stockage dans les mêmes conditions.

Par ailleurs, les mêmes morceaux de sucre que ceux préparés à l'exemple 1) ci-dessus ont également été soumis à un stockage dans des conditions plus drastiques : température de 25°C avec une HRE de 85 %. Au bout de 3 mois de stockage, il n'a pas été noté de dégradation significative supplémentaire par rapport aux résultats présentés dans le Tableau III ci-dessus.

Enfin, on a également déterminé la quantité de vitamine A présente dans 16 morceaux de sucre, tels que préparés ci-dessus à l'exemple 1, après 20 jours de stockage à une température comprise entre 20 et 25°C, dans une atmosphère renfermant entre 40 et 60% d'HRE afin d'évaluer l'homogénéité de la répartition de la vitamine A dans le sucre au cours du procédé de préparation des morceaux. A t = 0, la quantité de vitamine A présente était de 91 000 UI/kg de sucre. Les résultats sont présentés dans le tableau IV ci-après :

**TABLEAU IV**

| | |
|---|---|
| Quantité moyenne de vitamine A dans les morceaux | 70 800 UI/kg |
| Ecart-Type | 6730 UI/kg |
| Ratio Ecart-Type/moyenne | 9,5 % |

L'ensemble de ces résultats montre que le procédé de préparation conforme à l'Invention permet d'incorporer dans des morceaux de sucre de façon durablement homogène des substances sensibles aux agressions extérieures, lesdites substances étant enrobées par un enrobage soluble dans l'eau, tout en préservant l'enrobage desdites substances et en améliorant leur stabilité au cours du temps.

## Revendications

1. Procédé de fabrication de morceaux de sucre fortifiés par des microparticules d'au moins une substance d'intérêt comportant un enrobage soluble dans l'eau, comprenant au moins les étapes suivantes :
a) la préparation d'un pré-mélange renfermant au moins, à titre d'ingrédients, du sucre sec en poudre et des microparticules d'au moins une substance d'intérêt choisie parmi les vitamines, les protéines, les microorganismes, les colorants et les molécules volatiles comportant un enrobage soluble dans l'eau ;
b) l'incorporation du pré-mélange obtenu en a) avec du sucre en poudre, ledit sucre en poudre étant humidifié préalablement, simultanément ou postérieurement à l'incorporation du pré-mélange ;
c) le mélange du pré-mélange obtenu en a) et du sucre en poudre humidifié pour obtenir un sucre en poudre humide fortifié en substance d'intérêt ;
d) le moulage du sucre en poudre humide fortifié obtenu en c) ; et
e) le séchage des morceaux de sucre fortifiés en substance d'intérêt, **ledit procédé étant caractérisé par le fait que :**
- ledit pré-mélange de l'étape a) renferme en outre au moins une matière grasse,
- l'étape a) de préparation du pré-mélange est effectuée à une température supérieure à la température de fusion de ladite matière grasse ; et que
- l'étape a) comprend au moins les sous-étapes suivantes :
a1) l'introduction de la matière grasse dans le sucre sec en poudre sous agitation,
a2) le mélange du sucre sec en poudre et de la matière grasse, et
a3) l'ajout des microparticules de ladite substance d'intérêt dans le pré-mélange obtenu en a2), sous agitation.

2. Procédé selon la revendication 1, **caractérisé par le fait que** les sous-étapes a1), a2) et a3) de l'étape a) sont réalisées dans l'ordre a1), puis a2), puis a3).

3. Procédé selon la revendication 1 ou 2, **caractérisé par le fait qu'**au sein du pré-mélange, la (ou les) matière(s) grasse(s) végétale(s) est (sont) utilisée(s) en une quantité inférieure ou égale à 5% en poids par rapport au poids total dudit pré-mélange.

4. Procédé selon la revendication 3, **caractérisé par le fait qu'**au sein du pré-mélange, la (ou les) matière(s) grasse(s) végétale(s) est (sont) utilisée(s) en une quantité comprise entre 1 et 2% en poids par rapport au poids total du pré-mélange.

5. Procédé selon l'une quelconque des revendications précédentes, **caractérisé par le fait que** la (ou les) matière(s) grasse(s) est (sont) choisie(s) parmi les corps hydrogénés et non hydrogénés, fractionnés ou non fractionnés, estérifiés ou non estérifiés.

6. Procédé selon la revendication 5, **caractérisé par le fait que** la (ou les) matière(s) grasse(s) est (sont) choisie(s) parmi l'huile de palme stéarique, l'huile de palme, le beurre de cacao, le beurre de cacahuètes, l'huile de palmiste, l'huile de coprah hydrogéné ou non hydrogénée, les cires alimentaires, la cire microcristalline d'origine pétrolière, l'acide stéarique, l'acide palmitique, les huiles de tournesol, de soja et d'arachide, ainsi que parmi les mélanges desdites matières grasses.

7. Procédé selon l'une quelconque des revendications précédentes, **caractérisé par le fait que** la (ou les) matière(s) grasse(s) utilisées sont des matières grasses végétale(s) ayant une température de fusion comprise entre 10 et 50°C.

8. Procédé selon la revendication 7, **caractérisé par le fait que** la (ou les) matière(s) grasse(s) utilisées sont des matières grasses végétale(s) ayant une température de fusion comprise entre 25 et 45°C.

9. Procédé selon la revendication 8, **caractérisé par le fait que** la matière grasse végétale est de l'huile de coprah hydrogénée ou non hydrogénée.

10. Procédé selon l'une quelconque des revendications précédentes, **caractérisé par le fait que** le sucre en poudre sec présente une granulométrie moyenne comprise entre 0,3 et 1,0 mm.

11. Procédé selon la revendication 10, **caractérisé par le fait que** le sucre en poudre sec présente une granulométrie moyenne comprise entre 0,4 et 0,8 mm.

12. Procédé selon l'une quelconque des revendications précédentes, **caractérisé par le fait qu'**au sein du pré-mélange, le sucre sec en poudre représente de 60 à 98% en poids par rapport au poids total du pré-mélange.

13. Procédé selon l'une quelconque des revendications précédentes, **caractérisé par le fait que** la ou les substance(s) d'intérêt sont choisies parmi les vitamines A, B, C, D et E.

14. Procédé selon la revendication 13, **caractérisé par le fait que** la substance d'intérêt est de la vitamine A.

15. Procédé selon l'une quelconque des revendications précédentes, **caractérisé par le fait que** les microparticules sont des microparticules de vitamine A dont l'enrobage comporte au moins un agent anti-oxydant.

16. Procédé selon l'une quelconque des revendications précédentes, **caractérisé par le fait que** l'enrobage soluble dans l'eau est constitué de sucre et/ou d'un ou plusieurs polymères de nature saccharidique.

17. Procédé selon la revendication 15 ou 16, **caractérisé par le fait que** les microparticules de vitamine A sont choisies parmi les produits constitués d'un enrobage composé de gomme arabique, de sucre et d'amidon et renfermant un mélange de butylhydroxytoluène et d'ascorbate de sodium à titre d'agents anti-oxydants ; d'un enrobage composé de dextrine, de sucre et d'amidon et renfermant du butyl-p-crésol à titre d'agent anti-oxydant ou d'un enrobage de sucre et d'amidon avec un mélange de butylhydroxytoluène et d'ascorbate de sodium à titre d'agents anti-oxydants.

18. Procédé selon l'une quelconque des revendications précédentes, **caractérisé par le fait qu'**au sein du pré-mélange, la ou les microparticules de substances d'intérêt représentent de 1 à 35% en poids par rapport au poids total du pré-mélange.

19. Procédé selon l'une quelconque des revendications précédentes, **caractérisé par le fait que** la substance d'intérêt est une vitamine et qu'elle représente de 10 000 à 40 000 UI par gramme de pré-mélange.

20. Procédé selon l'une quelconque des revendications précédentes, **caractérisé par le fait que** le pré-mélange renferme en outre un ou plusieurs agents anti-oxydants.

21. Procédé selon l'une quelconque des revendications précédentes, **caractérisé par le fait que** le sucre sec en poudre utilisé à la sous-étape a1) est préalablement chauffé à une température comprise entre 25 et 70°C.

22. Procédé selon l'une quelconque des revendications précédentes, **caractérisé par le fait que** la matière grasse utilisée lors de la sous-étape a1) est préalablement portée à une température supérieure à sa température de fusion avant d'être incorporée au sucre sec en poudre.

23. Procédé selon l'une quelconque des revendications précédentes, **caractérisé par le fait que** le rapport pondéral pré-mélange / sucre en poudre lors de l'étape b) varie entre 1/1000 et 1/100.

24. Procédé selon l'une quelconque des revendications précédentes, **caractérisé par le fait que** lors de l'étape b), le taux d'humidité au sein du sucre en poudre humidifié est compris entre 1 et 3 % en poids par rapport au poids total du mélange.

25. Procédé selon l'une quelconque des revendications précédentes, **caractérisé par le fait que** lors de l'étape b), le sucre en poudre est humidifié par pulvérisation d'eau directement au sein du mélange sucre en poudre/pré-mélange, simultanément à l'étape b).

26. Procédé selon l'une quelconque des revendications précédentes, **caractérisé par le fait que** les étapes b) et c) du procédé sont conduites à une température comprise entre 15 et 40°C.

27. Procédé selon l'une quelconque des revendications précédentes, **caractérisé par le fait qu'**après l'étape de moulage, les morceaux de sucre sont séchés à une température comprise entre 60 et 75°C.

28. Morceau de sucre fortifié en substance(s) d'intérêt susceptible d'être obtenu par la mise en oeuvre du procédé tel que défini à l'une quelconque des revendication 1 à 27, **caractérisé par le fait qu'**il renferme des microparticules d'au moins une substance d'intérêt choisie parmi les vitamines, les protéines, les microorganismes, les colorants et les molécules volatiles, ladite substance d'intérêt comportant un enrobage soluble dans l'eau, et au moins une matière grasse.

29. Morceau de sucre selon la revendication 28, **caractérisé par le fait que** les substances d'intérêt sensibles aux agressions extérieures sont choisies parmi les vitamines A, B, C, D et E.

30. Morceau de sucre selon la revendication 29, **caractérisé par le fait qu'**il renferme des microparticules de vitamine A.

31. Morceau de sucre selon l'une quelconque des revendications 28 à 30, **caractérisé par le fait que** la quantité de microparticules est comprise entre 0,01 et 5 g/kg de sucre.

32. Morceau de sucre selon l'une quelconque des revendications 28 à 31, **caractérisé par le fait que** la substance d'intérêt est une vitamine et que la quantité de vitamine est comprise entre 100 et 150 000 UI par kg de sucre.

33. Morceau de sucre selon l'une quelconque des revendications 30 à 32, **caractérisé par le fait que** les microparticules de vitamine A sont choisies parmi les produits constitués d'un enrobage composé de gomme arabique, de sucre et d'amidon et renfermant un mélange de butylhydroxytoluène et d'ascorbate de sodium à titre d'agents anti-oxydants ; d'un enrobage composé de dextrine, de sucre et d'amidon et renfermant du butyl-*p*-crésol à titre d'agent anti-oxydant ou d'un enrobage de sucre et d'amidon avec un mélange de butylhydroxytoluène et d'ascorbate de sodium à titre d'agents anti-oxydants.

## Patentansprüche

1. Verfahren zur Herstellung von Zuckerstücken, die mit Mikropartikeln wenigstens einer Substanz von Interesse, die eine in Wasser lösliche Umhüllung umfasst, angereichert sind, umfassend wenigstens die folgenden Stufen:
a) Herstellung einer Vormischung, die wenigstens, als Ingredienzien, trockenen feinen Kristallzucker und Mikropartikel wenigstens einer Substanz von Interesse, ausgewählt aus Vitaminen, Proteinen, Mikroorganismen, Färbemitteln und flüchtigen Molekülen, die eine in Wasser lösliche Umhüllung umfassen, enthält;
b) Vermengung der in a) erhaltenen Vormischung mit dem feinen Kristallzucker, wobei der feine Kristallzucker vor, gleichzeitig mit oder nach der Vermengung der Vormischung angefeuchtet wurde;
c) Mischen der in a) erhaltenen Vormischung und des angefeuchteten feinen Kristallzuckers, um einen angefeuchteten feinen Kristallzucker, der an Substanz von Interesse angereichert ist, zu erhalten;
d) Formung des feuchten angereicherten feinen Kristallzuckers, der in c) erhalten wurde, und
e) Trocknung der Zuckerstücke, die an Substanz von Interesse angereichert sind, wobei das Verfahren **dadurch gekennzeichnet ist, dass**:
- die Vormischung der Stufe a) außerdem wenigstens ein Fett enthält,
- die Stufe a) der Herstellung der Vormischung bei einer Temperatur über der Schmelztemperatur des Fetts durchgeführt wird, und dass
- die Stufe a) wenigstens die folgenden Unterstufen umfasst:
a1) die Einführung des Fetts in den trockenen feinen Kristallzucker unter Rühren,
a2) das Mischen des trockenen feinen Kristallzuckers und des Fetts und
a3) Zugabe der Mikropartikel der Substanz von Interesse in die in a2) erhaltene Vormischung unter Rühren.

2. Verfahren gemäß Anspruch 1, **dadurch gekennzeichnet, dass** die Unterstufen a1), a2) und a3) der Stufe a) in der Reihenfolge a1), dann a2), dann a3) durchgeführt werden.

3. Verfahren gemäß Anspruch 1 oder 2, **dadurch gekennzeichnet, dass** das Pflanzenfett (oder die Pflanzenfette) in der Vormischung in einer Menge unter oder gleich 5 Gewichtsprozent, bezogen auf das Gesamtgewicht der Vormischung, verwendet wird (werden).

4. Verfahren gemäß Anspruch 3, **dadurch gekennzeichnet, dass** das Pflanzenfett (oder die Pflanzenfette) in der Vormischung in einer Menge zwischen 1 und 2 Gewichtsprozent, bezogen auf das Gesamtgewicht der Vormischung, verwendet wird (werden).

5. Verfahren gemäß einem der vorangehenden Ansprüche, **dadurch gekennzeichnet, dass** das Fett (oder die Fette) aus hydrierten und nicht-hydrierten, fraktionierten oder nicht-fraktionierten, veresterten oder nicht-veresterten Fettsubstanzen ausgewählt ist (sind).

6. Verfahren gemäß Anspruch 5, **dadurch gekennzeichnet, dass** das Fett (oder die Fette) aus Palmöl mit hohem Stearinsäuregehalt, Palmöl, Kakaobutter, Erdnussbutter, Palmkernöl, hydriertem oder nicht-hydriertem Kokosöl, alimentären Wachsen, mikrokristallinem Wachs aus Erdöl, Stearinsäure, Palmitinsäure, den Ölen von Lackmus, Soja und Erdnuss sowie Gemischen der genannten Fette ausgewählt ist (sind).

7. Verfahren gemäß einem der vorangehenden Ansprüche, **dadurch gekennzeichnet, dass** das verwendete Fett (oder die verwendeten Fette) Pflanzenfett(e) ist (sind), das (die) eine Schmelztemperatur zwischen 10 und 50°C hat (haben).

8. Verfahren gemäß Anspruch 7, **dadurch gekennzeichnet, dass** das verwendete Fett (oder die verwendeten Fette) Pflanzenfett(e) ist (sind), das (die) eine Schmelztemperatur zwischen 25 und 45°C hat (haben).

9. Verfahren gemäß Anspruch 8, **dadurch gekennzeichnet, dass** das Pflanzenfett hydriertes oder nichthydriertes Kokosöl ist.

10. Verfahren gemäß einem der vorangehenden Ansprüche, **dadurch gekennzeichnet, dass** der trockene feine Kristallzucker eine mittlere Granulometrie zwischen 0,3 und 1,0 mm aufweist.

11. Verfahren gemäß Anspruch 10, **dadurch gekennzeichnet, dass** der trockene feine Kristallzucker eine mittlere Granulometrie zwischen 0,4 und 0,8 mm aufweist.

12. Verfahren gemäß einem der vorangehenden Ansprüche, **dadurch gekennzeichnet, dass** der trockene feine Kristallzucker in der Vormischung 60 bis 98 Gewichtsprozent, bezogen auf das Gesamtgewicht der Vormischung, darstellt.

13. Verfahren gemäß einem der vorangehenden Ansprüche, **dadurch gekennzeichnet, dass** die Substanz (en) von Interesse aus den Vitaminen A, B, C, D und E ausgewählt ist (sind).

14. Verfahren gemäß Anspruch 13, **dadurch gekennzeichnet, dass** die Substanz von Interesse Vitamin A ist.

15. Verfahren gemäß einem der vorangehenden Ansprüche, **dadurch gekennzeichnet, dass** die Mikropartikel Mikropartikel von Vitamin A sind, deren Umhüllung wenigstens ein Antioxidationsmittel umfasst.

16. Verfahren gemäß einem der vorangehenden Ansprüche, **dadurch gekennzeichnet, dass** die in Wasser lösliche Umhüllung aus Zucker und/oder einem oder mehreren Polymeren mit Saccharid-Natur besteht.

17. Verfahren gemäß Anspruch 15 oder 16, dadurch **gekenn- zeichnet,** dass die Mikropartikel von Vitamin A aus den Produkten ausgewählt sind, die von einer Umhüllung, die aus Gummi arabicum, Zucker und Stärke besteht und die eine Mischung aus Butylhydroxytoluol und Natriumascorbat als Antioxidationsmittel enthält; einer Umhüllung, die aus Dextrin, Zucker und Stärke besteht und die Butyl-p-Cresol als Antioxidationsmittel enthält, oder einer Umhüllung aus Zucker und Stärke mit einer Mischung aus Butylhydroxytoluol und Natriumascorbat als Antioxidationsmittel besteht, gebildet werden.

18. Verfahren gemäß einem der vorangehenden Ansprüche, **dadurch gekennzeichnet, dass** das oder die Mikropartikel von Substanzen von Interesse in der Vormischung 1 bis 35 Gewichtsprozent, bezogen auf das Gesamtgewicht der Vormischung, darstellen.

19. Verfahren gemäß einem der vorangehenden Ansprüche, **dadurch gekennzeichnet, dass** die Substanz von Interesse ein Vitamin ist und dass sie 10.000 bis 40.000 IU pro Gramm Vormischung darstellt.

20. Verfahren gemäß einem der vorangehenden Ansprüche, **dadurch gekennzeichnet, dass** die Vormischung außerdem ein oder mehrere Antioxidationsmittel enthält.

21. Verfahren gemäß einem der vorangehenden Ansprüche, **dadurch gekennzeichnet, dass** der trockene feine Kristallzucker, der in der Unterstufe a1) verwendet wird, vorher auf eine Temperatur zwischen 25 und 70°C erwärmt wird.

22. Verfahren gemäß einem der vorangehenden Ansprüche, **dadurch gekennzeichnet, dass** das während der Unterstufe a1) verwendete Fett vorab, bevor es in den trockenen feinen Kristallzucker eingemengt wird, auf eine Temperatur über seiner Schmelztemperatur gebracht wird.

23. Verfahren gemäß einem der vorangehenden Ansprüche, **dadurch gekennzeichnet, dass** das Gewichtsverhältnis Vormischung/feiner Kristallzucker während Stufe b) zwischen 1/1.000 und 1/100 variiert.

24. Verfahren gemäß einem der vorangehenden Ansprüche, **dadurch gekennzeichnet, dass** während der Stufe b) der Feuchtigkeitswert im Inneren des angefeuchteten feinen Kristallzuckers zwischen 1 und 3 Gewichtsprozent, bezogen auf das Gesamtgewicht des Gemisches, liegt.

25. Verfahren gemäß einem der vorangehenden Ansprüche, **dadurch gekennzeichnet, dass** der feine Kristallzucker während der Stufe b) durch Zerstäubung von Wasser direkt im Inneren des Gemisches feiner Kristallzucker/Vormischung gleichzeitig mit Stufe b) angefeuchtet wird.

26. Verfahren gemäß einem der vorangehenden Ansprüche, **dadurch gekennzeichnet, dass** die Stufen b) und c) des Verfahrens bei einer Temperatur zwischen 15 und 40°C durchgeführt werden.

27. Verfahren gemäß einem der vorangehenden Ansprüche, **dadurch gekennzeichnet, dass** die Zuckerstücke nach der Stufe der Formung bei einer Temperatur zwischen 60 und 75°C getrocknet werden.

28. Zuckerstück, das an Substanz(en) von Interesse angereichert ist, das durch Durchführung des Verfahrens, wie es in einem der Ansprüche 1 bis 27 definiert ist, erhalten wird, **dadurch gekennzeichnet, dass** es Mikropartikel wenigstens einer Substanz von Interesse, ausgewählt aus Vitaminen, Proteinen, Mikroorganismen, Färbemitteln und flüchtigen Molekülen, wobei die Substanz von Interesse eine in Wasser lösliche Umhüllung umfasst, und wenigstens ein Fett enthält.

29. Zuckerstück gemäß Anspruch 28, **dadurch gekennzeichnet, dass** die Substanzen von Interesse, die gegenüber äußeren Angriffen empfindlich sind, aus den Vitaminen A, B, C, D und E ausgewählt sind.

30. Zuckerstück gemäß Anspruch 29, **dadurch gekennzeichnet, dass** es Mikropartikel von Vitamin A enthält.

31. Zuckerstück gemäß einem der Ansprüche 28 bis 30, **dadurch gekennzeichnet, dass** die Menge an Mikropartikeln zwischen 0,01 und 5 g/kg Zucker liegt.

32. Zuckerstück gemäß einem der Ansprüche 28 bis 31, **dadurch gekennzeichnet, dass** die Substanz von Interesse ein Vitamin ist und dass die Menge an Vitamin zwischen 100 und 150.000 IU pro kg Zucker liegt.

33. Zuckerstück gemäß einem der Ansprüche 30 bis 32, dadurch g**ekennzeichnet,** dass die Mikropartikel von Vitamin A aus Produkten ausgewählt sind, die von einer Umhüllung, die aus Gummi arabicum, Zucker und Stärke besteht und die ein Gemisch aus Butylhydroxytoluol und Natriumascorbat als Antioxidantien enthält; einer Umhüllung, die aus Dextrin, Zucker und Stärke besteht und die Butyl-p-Cresol als Antioxidationsmittel enthält, oder einer Umhüllung aus Zucker und Stärke mit einem Gemisch aus Butylhydroxytoluol und Natriumascorbat als Antioxidationsmittel besteht, gebildet werden.

## Claims

1. A process for the manufacture of sugar lumps fortified by microparticles of at least one advantageous substance comprising a water-soluble coating, comprising at least the following stages:
a) the preparation of a premix including at least, as ingredients, dry fine granulated sugar and microparticles of at least one advantageous substance chosen from vitamins, proteins, microorganisms, dyes and volatile molecules comprising a water-soluble coating;
b) the incorporation of the premix obtained in a) with fine granulated sugar, said fine granulated sugar being moistened prior to, simultaneously with or subsequent to the incorporation of the premix;
c) the mixing of the premix obtained in a) and of the moistened fine granulated sugar in order to obtain a wet fine granulated sugar fortified with advantageous substance;
d) the molding of the fortified wet fine granulated sugar obtained in c); and
e) the drying of the sugar lumps fortified with advantageous substance,
**said process being characterized in that:**
- said premix of stage a) additionally includes at least one fatty substance,
- stage a) of preparation of the premix is carried out at a temperature above the melting point of said fatty substance; and
- stage a) comprises at least the following substages:
• a1) the introduction of the fatty substance into the dry fine granulated sugar with stirring,
• a2) the mixing of the dry fine granulated sugar and of the fatty substance, and
• a3) the addition of the microparticles of said advantageous substance to the premix obtained in a2), with stirring.

2. The process as claimed in claim 1, **characterized in that** the substages a1), a2) and a3) of stage a) are carried out in the order a1), then a2), then a3).

3. The process as claimed in claim 1 or 2, **characterized in that**, within the premix, the vegetable fatty substance(s) is (are) used in an amount of less than or equal to 5% by weight, with respect to the total weight of said premix.

4. The process as claimed in claim 3, **characterized in that**, within the premix, the vegetable fatty substance(s) is (are) used in an amount of between 1 and 2% by weight, with respect to the total weight of the premix.

5. The process as claimed in any one of the preceding claims, **characterized in that** the fatty substance(s) is (are) chosen from hydrogenated and nonhydrogenated, fractionated or nonfractionated and esterified or nonesterified substances.

6. The process as claimed in claim 5, **characterized in that** the fatty substance(s) is (are) chosen from stearic palm oil, palm oil, cocoa butter, peanut butter, palm kernel oil, hydrogenated or nonhydrogenated coconut oil, food waxes, microcrystalline wax of petroleum origin, stearic acid, palmitic acid, sunflower, soybean and peanut oils, and from the mixtures of said fatty substances.

7. The process as claimed in any one of the preceding claims, **characterized in that** the fatty substance(s) used are vegetable fatty substance(s) having a melting point of between 10 and 50°C.

8. The process as claimed in claim 7, **characterized in that** the fatty substance(s) used are vegetable fatty substance(s) having a melting point of between 25 and 45°C.

9. The process as claimed in claim 8, **characterized in that** the vegetable fatty substance is hydrogenated or nonhydrogenated coconut oil.

10. The process as claimed in any one of the preceding claims, **characterized in that** the dry fine granulated sugar exhibits a mean particle size of between 0.3 and 1.0 mm.

11. The process as claimed in claim 10, **characterized in that** the dry fine granulated sugar exhibits a mean particle size of between 0.4 and 0.8 mm.

12. The process as claimed in any one of the preceding claims, **characterized in that**, within the premix, the dry fine granulated sugar represents from 60 to 98% by weight, with respect to the total weight of the premix.

13. The process as claimed in any one of the preceding claims, **characterized in that** the advantageous substance(s) are chosen from vitamins A, B, C, D and E.

14. The process as claimed in claim 13, **characterized in that** the advantageous substance is vitamin A.

15. The process as claimed in any one of the preceding claims, **characterized in that** the microparticles are vitamin A microparticles having a coating comprising at least one antioxidant.

16. The process as claimed in any one of the preceding claims, **characterized in that** the water-soluble coating is composed of sugar and/or of one or more polymers of saccharide nature.

17. The process as claimed in claim 15 or 16, **characterized in that** the vitamin A microparticles are chosen from the products having a coating composed of gum arabic, of sugar and of starch and including a mixture of butylated hydroxytoluene and of sodium ascorbate as antioxidants; of a coating composed of dextrin, of sugar and of starch and including butylated p-cresol as antioxidant or of a coating of sugar and of starch, with a mixture of BHT and of sodium ascorbate as antioxidants.

18. The process as claimed in any one of the preceding claims, **characterized in that**, within the premix, the microparticle or microparticles of advantageous substances represent from 1 to 35% by weight, with respect to the total weight of the premix.

19. The process as claimed in any one of the preceding claims, **characterized in that** the advantageous substance is a vitamin and **in that** it represents from 10 000 to 40 000 IU per gram of premix.

20. The process as claimed in any one of the preceding claims, **characterized in that** the premix additionally includes one or more antioxidants.

21. The process as claimed in any one of the preceding claims, **characterized in that** the dry fine granulated sugar used in substage a1) is heated beforehand to a temperature of between 25 and 70°C.

22. The process as claimed in any one of the preceding claims, **characterized in that** the fatty substance used during substage a1) is brought beforehand to a temperature above its melting point before being incorporated in the dry fine granulated sugar.

23. The process as claimed in any one of the preceding claims, **characterized in that** the premix/fine granulated sugar ratio by weight during stage b) varies between 1/1000 and 1/100.

24. The process as claimed in any one of the preceding claims, **characterized in that**, during stage b), the level of moisture within the moistened fine granulated sugar is between 1 and 3% by weight, with respect to the total weight of the mixture.

25. The process as claimed in any one of the preceding claims, **characterized in that**, during stage b), the fine granulated sugar is moistened by spraying water directly within the fine granulated sugar/premix mixture, simultaneously in stage b).

26. The process as claimed in any one of the preceding claims, **characterized in that** stages b) and c) of the process are carried out at a temperature of between 15 and 40°C.

27. The process as claimed in any one of the preceding claims, **characterized in that**, after the molding stage, the sugar lumps are dried at a temperature of between 60 and 75°C.

28. A sugar lump fortified with advantageous substance(s) capable of being obtained by the use of the process as defined in any one of claims 1 to 27, **characterized in that** it includes microparticles of at least one advantageous substance chosen from vitamins, proteins, microorganisms, dyes and volatile molecules, said advantageous substance comprising a water-soluble coating and at least one fatty substance.

29. The sugar lump as claimed in claim 28, **characterized in that** the advantageous substances sensitive to external attacks are chosen from vitamins A, B, C, D and E.

30. The sugar lump as claimed in claim 29, **characterized in that** it includes vitamin A microparticles.

31. The sugar lump as claimed in any one of claims 28 to 30, **characterized in that** the amount of microparticles is between 0.01 and 5 g/kg of sugar.

32. The sugar lump as claimed in any one of claims 28 to 31, **characterized in that** the advantageous substance is a vitamin and **in that** the amount of vitamin is between 100 and 150 000 IU per kg of sugar.

33. The sugar lump as claimed in any one of claims 30 to 32, **characterized in that** the vitamin A microparticles are chosen from the products having a coating composed of gum arabic, of sugar and of starch and including a mixture of butylated hydroxytoluene and of sodium ascorbate as antioxidants; of a coating composed of dextrin, of sugar and of starch and including butylated p-cresol as antioxidant or of a coating of sugar and of starch, with a mixture of BHT and of sodium ascorbate as antioxidants.
